# EUROPEAN PATENT APPLICATION

(11) **EP 3 757 925 A1**
(43) Date of publication of application: **30.12.2020**
(21) Application number: 18944561.2
(22) Date of filing: 27.12.2018
(51) Int. Cl.: G06Q 30/02

(54) **INFORMATION PROCESSING DEVICE, INFORMATION PROCESSING SYSTEM, AND INFORMATION PROCESSING METHOD**

(71) Applicant: Rakuten, Inc., Tokyo 158-0094 (JP)
(72) Inventor: FUJITA, Satoshi, Tokyo 158-0094 (JP); DEEB, Zulfikar, Tokyo 158-0094 (JP)
(74) Representative: EIP
(86) International application number: PCT/JP2018/048160
(87) International publication number: WO 2020/136809

(57) **Abstract**

An environment is provided in which a possibility that the user suffers a disadvantage due to a difference in a currency exchange rate at the time of exchange and a currency exchange rate at the time of application is eliminated, and which enables an issued benefit applicable in different economic blocks. Accordingly, an information processing device includes an information obtaining unit that obtains, from a value managing device, information on a value for each locality, the information being associated with identification information of a user who uses a terminal device, the value for each locality corresponding to a currency value for each locality, a rate setting unit which obtains information on a currency exchange rate consecutively, and which sets a conversion rate for the values between the localities, an information transmitting unit that transmits information on a value applicable for the user based on the value for each locality obtained by the information obtaining unit, the information on the value applicable for the user being information necessary for the terminal device to present a payment procedure screen for electronic-commerce by a currency of a first locality between the terminal device and a service server, and a value processing unit that executes, in response to a request for applying a value of a second locality upon a user operation through the payment procedure screen, a process of converting the applied value of the second locality into a currency value of the first locality by the conversion rate at a predetermined time point, and of putting the converted currency value to use in a settlement amount in the electronic-commerce, the second locality being a locality other than the first locality.

## Description

### TECHNICAL FIELD

The present disclosure relates to a technical field for an information processing device, an information processing system, and an information processing method of executing a process relating to a benefit obtained by a user through electronic-commerce, etc.

### BACKGROUND ART

When utilizing electronic- commerce, etc., a user may obtain a benefit that is applicable in the electronic-commerce, etc. An example is a case in which points that can be put to use in a payment at the time of the next purchase are obtained.

Application of such a benefit like points is often limited within the same economic block where the same currency as that of a purchase which contributes to the obtainment of the benefit is used. For example, regarding the benefit that is obtained by a purchase from a store that carries out a transaction using U.S. dollar which is available in America, such a benefit is applicable only when a purchase is made at the store that also carries out a transaction using U.S. dollar.

That is, the benefit obtained by a purchase at a store that carries out a transaction using U.S. dollar cannot be applied to a purchase at a store that carries out a transaction using only a different currency like Euro.

The following Patent Literature 1 discloses a structure that enables a point exchange in consideration of a currency exchange rate.

More specifically, for example, points issued in a foreign country are exchanged to points issued in Japan.

### CITATION LIST

### PATENT LITERATURES

Patent Literature 1: Japan Patent No. 6216896B

### SUMMARY OF INVENTION

### TECHNICAL PROBLEM

However, the currency exchange rate changes time by time. Accordingly, when the converted points issued in Japan are to be applied, if the Japanese currency value becomes lower than that at the time of exchange, this is possibly a disadvantage for the user.

More specifically, U.S. dollar and Japanese YEN will be described as examples. When 1 U.S. dollar and 100 Japanese YEN are equivalent at the time of exchange, and when 1 U.S. dollar becomes equivalent to 120 Japanese YEN at the time of the application of the points having undergone the exchange i.e., when the value of Japanese YEN has decreased, since the exchange has completed before Japanese YEN decreases, a user makes a loss.

Accordingly, an objective of the present disclosure is to provide an environment in which a possibility that the user suffers a disadvantage due to a difference in a currency exchange rate at the time of exchange and a currency exchange rate at the time of application is eliminated, and which enables an issued benefit applicable in different economic blocks.

### SOLUTION TO PROBLEM

An information processing device according to the present disclosure includes: an information obtaining unit that obtains, from a value managing device, information on a value for each locality, the information being associated with identification information of a user who uses a terminal device, the value for each locality corresponding to a currency value for each locality; a rate setting unit which obtains information on a currency exchange rate consecutively, and which sets a conversion rate for the values between the localities; an information transmitting unit that transmits information on a value applicable for the user based on the value for each locality obtained by the information obtaining unit, the information on the value applicable for the user being information necessary for causing the terminal device to present a payment procedure screen for electronic-commerce by a currency of a first locality between the terminal device and a service server; and a value processing unit that executes, in response to a request for applying a value of a second locality upon a user operation through the payment procedure screen, a process of converting the applied value of the second locality into a currency value of the first locality by the conversion rate at a predetermined time point and of putting the converted currency value to use in a settlement amount in the electronic-commerce, the second locality being a locality other than the first locality.

The term value is, for example, a value of a benefit obtained by the user, and is calculated based on the currency value for each locality. Moreover, the term locality means, for example, a locality or an economic block where the same unit of currency (e.g., Japanese YEN or U.S. dollar) is used.

In the above-described information processing device, the predetermined time point may be a time point at which the payment procedure screen is provided.

Accordingly, a divergence between the state grasped through the payment procedure screen and the actually applied points is avoided.

An information processing system according to the present disclosure includes: an information obtaining unit that obtains, from a value managing device, information on a value for each locality, the information being associated with identification information of a user who uses a terminal device, the value for each locality corresponding to a currency value for each locality; a rate setting unit which obtains information on a currency exchange rate consecutively, and which sets a conversion rate for the values between the localities; an information transmitting unit that transmits to the terminal device, webpage information to display a payment procedure screen for electronic-commerce by a currency of the first locality, together with information on the value applicable for the user based on the value for each locality obtained by the information obtaining unit; and a value processing unit that executes, in response to a request for applying a value of a second locality upon a user operation through the payment procedure screen, a process of converting the applied value of the second locality into a currency value of the first locality by the conversion rate at a predetermined time point, and of putting the converted currency value to use in a settlement amount in the electronic-commerce, the second locality being a locality other than the first locality.

The webpage information is, for example, data like HyperText Markup Language (HTML).

In the above-described information processing system, the predetermined time point may be a time point at which the payment procedure screen is provided.

Accordingly, a divergence between the state grasped through the payment procedure screen and the actually applied points is avoided.

In the above-described information processing system, the information transmitting unit may transmit information in such a way that information based on a currency value of the first locality is presented on the payment procedure screen, the currency value of the first locality being a currency value into which a value of a locality other than the first locality, which is applicable for the user, is converted by the conversion rate at the predetermined time point.

Accordingly, in the payment procedure screen, for example, a value when the points of America are converted into Japanese YEN (or a value when converted into the points of Japan) is displayed.

In the above-described information processing system, the information transmitting unit may transmit information in such a way that a currency value of the first locality is presented on the payment procedure screen, the currency value of the first locality being a currency value into which a value of a locality other than the first locality, which is applicable for the user, is converted by the conversion rate at the predetermined time point.

Accordingly, in the payment procedure screen, for example, a value when the points of America are converted into Japanese YEN is displayed.

In the above-described information processing system, the information transmitting unit may transmit information in such a way that a currency value obtained by adding a currency value of the first locality to the value of the first locality is presented on the payment procedure screen, the currency value of the first locality being a currency value into which a value of a locality other than the first locality, which is applicable for the user, is converted by the conversion rate at the predetermined time point.

Accordingly, when owning various kinds of points, the user can grasp how many points are applicable.

In the above-described information processing system, the information transmitting unit may select a value of an applicable locality among the values of the localities other than the first locality, which are applicable for the user, and may transmit information in such a way that information based on a currency value of the first locality is presented on the payment procedure screen, the currency value of the first locality being a currency value into which the value of the applicable locality is converted by the conversion rate at the predetermined time point.

For example, the value of a non-applicable locality is not displayed.

In the payment procedure screen displayed on the terminal device by the transmitted webpage information by the above-described information processing system, selection of the value of the applicable locality may be executed in accordance with a service kind of the electronic-commerce that provides the payment procedure screen.

Accordingly, the user is capable of selecting the points to be applied for the owning points without paying attention to the kind of the utilized electronic-commerce service.

In the above-described information processing system, the information transmitting unit may transmit information in such a way that, in the payment procedure screen, information on the conversion rate adopted for the value of the locality other than the first locality is presented.

Accordingly, the clarity of the point conversion can be appealed visually.

In the above-described information processing system, the information transmitting unit may transmit information in such a way that, in the payment procedure screen, information regarding a change in the conversion rate adopted for the value of the locality other than the first locality is presented.

Accordingly, an indicator to decide the points to be applied is provided to the user.

In the payment procedure screen displayed on the terminal device by the transmitted webpage information by the above-described information processing system, selection of application or non-application and designation of the applied amount in a case of the application may be enabled for the value of each locality individually.

Accordingly, the value of the locality for application can be easily selected.

An information processing method according to the present disclosure is executed by an information processing device, and the method includes: an information obtaining step of obtaining, from a value managing device, information on a value for each locality, the information being associated with identification information of a user who uses a terminal device, the value for each locality corresponding to a currency value for each locality; a rate setting step of obtaining information on a currency exchange rate consecutively, and of setting a conversion rate for the values between the localities; an information transmitting step of transmitting information on a value applicable for the user based on the value for each the locality obtained in the information obtaining step, the information on the value applicable for the user being information necessary for causing the terminal device to present a payment procedure screen for electronic-commerce by a currency of a first locality between the terminal device and a service server; and a value processing step of executing, in response to a request for applying the value of a second locality upon a user operation through the payment procedure screen, a process of converting the applied value of the second locality into a currency value of the first locality by the conversion rate at a predetermined time point, and of putting the converted currency value to use in a settlement amount in the electronic-commerce, the second locality being a locality other than the first locality.

Accordingly, an environment is provided in which a possibility that the user suffers a disadvantage due to a difference in a currency exchange rate at the time of exchange and a currency exchange rate at the time of application is eliminated, and which enables an issued benefit applicable in different economic blocks.

### ADVANTAGEOUS EFFECTS OF INVENTION

According to the present disclosure, an environment is provided in which a possibility that the user suffers a disadvantage due to a difference in a currency exchange rate at the time of exchange and a currency exchange rate at the time of application is eliminated, and which enables an issued benefit applicable in different economic blocks.

### BRIEF DESCRIPTION OF DRAWINGS

FIG. 1 is an explanatory diagram for a network that includes a platform terminal according to an embodiment of the present disclosure;
FIG. 2 is an explanatory diagram for a functional structure of the platform terminal according to the embodiment;
FIG. 3 is a block diagram for a computer apparatus according to the embodiment;
FIG. 4 is a diagram for describing a flow of a process executed by each information processing device when a user makes a purchase;
FIG. 5 is a diagram illustrating an example payment procedure screen;
FIG. 6 is a diagram for describing a flow of a process executed by each information processing device when the user makes a purchase;
FIG. 7 is a flowchart illustrating an example point converting process;
FIG. 8 is a flowchart illustrating an example purchase confirm information receiving process;
FIG. 9 is a diagram for describing a flow of a process executed by each information processing device when the user makes a purchase;
FIG. 10 is a diagram for describing a first modified example of an owned-point-information display field;
FIG. 11 is a diagram for describing a second modified example of the owned-point-information display field;
FIG. 12 is a diagram for describing a third modified example of the owned-point-information display field;
FIG. 13 is a diagram for describing a fourth modified example of the owned-point-information display field;
FIG. 14 is a diagram for describing a first modified example of an applied-point-information display field;
FIG. 15 is a diagram for describing a second modified example of the applied-point-information display field; and
FIG. 16 is a diagram for describing a third modified example of the applied-point-information display field.

### DESCRIPTION OF EMBODIMENTS

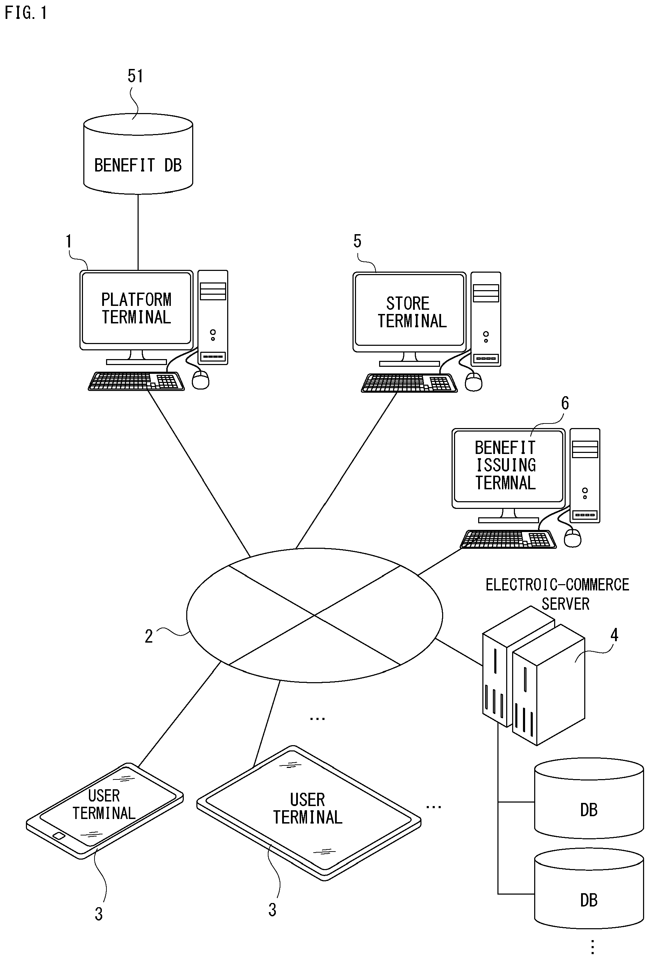

An example structure of a network system that includes a platform terminal 1 according to an embodiment will be described with reference to FIG. 1.

Note that in the following example case, an example benefit to be obtained by a user is points. In addition, a coupon like a "1 U.S. dollar discount ticket" is also considerable as an example of the benefit.

### <1. System Configuration>

The platform terminal 1 according to this embodiment is connected to a communication network 2.

Also connected to the communication network 2 are user terminals 3, an electronic-commerce server 4, a store terminal 5, and a benefit issuing terminal 6, etc.

The respective devices and the system are mutually communicable via the communication network 2.

Various examples for the structure of the communication network 2 are assumable. For example, the Internet, an intranet, an extranet, a Local Area Network (LAN), a Community Antenna TeleVision (CATV) communication network, a virtual private network (VPN), a telephone network, a mobile communication network, and a satellite communication network, etc., are assumable.

Moreover, various examples for the transmission media that construct a part of or the entire communication network 2 are assumable. For example, wired schemes, such as an Institute of Electrical and Electronics Engineers (IEEE) 1394, a Universal Serial Bus (USB), a power-line carrier, and a telephone line, or wireless schemes, such as infrared light like an Infrared Data Association (IrDA), a Bluetooth (registered trademark), an 802.11 wireless, a mobile phone network, a satellite connection, and a terrestrial digital network, are applicable.

The platform terminal 1 executes, for example, a process of converting a benefit that is issued in a given economic block into a benefit applicable in other economic blocks with a currency exchange rate being taken into consideration. In addition, the platform terminal 1 also executes a process of displaying, on a payment procedure screen presented on the user terminal 3 when the user makes a purchase activity, information on the benefit owned by the user upon converting the benefit into a value of the economic block where a store subjected to the purchase activity at this time belongs, and a process of consuming the benefit when the purchase is actually made, etc.

The user terminal 3 is an information processing terminal that is used by the user who purchases a product. The user terminal 3 executes, for example, a process of displaying each webpage browsed when the user purchases the product, and a process of transmitting information input by the user to the electronic-commerce server 4.

Moreover, the user terminal 3 is also used when the user views benefit information owned by the user.

The user terminal 3 is, for example, a Personal Computer (PC), a feature phone or a Personal Digital Assistants (PDA) that have a communication function, or a smart device, such as a smartphone, and a tablet computer.

The electronic-commerce server 4 is an information processing device that provides various services relating to a transaction of a product. For example, various kinds of services are provided via a virtual shopping mall achieved using the communication network 2.

Examples various services are a product searching service to search and present the product desired by the user among the group of products presently handled at a store (a virtual store) registered in the virtual shopping mall, a product managing function to manage the product that a product supplier wants to sell, a user information managing service to manage user information and to present as needed, a product supplier information managing service to manage information on the product supplier and to present as needed, and a settlement process service that aids a transaction of payment when the sales of the product is settled.

Moreover, the electronic-commerce server 4 manages a keyword (search keyword) used for searching and the handled product directly or indirectly in association with each other to provide the product searching service. That is, any structure is applicable as long as the product information suitable for the search keyword is obtainable.

The electronic-commerce server 4 manages various databases (DBs) to provide the above-described various kinds of services. Example DBs are a user DB that stores information on the user, a product supplier DB that stores information on the product supplier, a product DB that stores information on the product, a product page DB that stores information on the product page, and a search DB used for searching the product.

The store terminal 5 is utilized by a seller who sells the products utilizing the electronic-commerce service provided by the electronic-commerce server 4.

The store terminals 5 is, for example, a PC and a PDA with a communication function, or a smart device like a tablet terminal.

The benefit issuing terminal 6 is an information processing terminal that executes various kinds of processes of issuing the points inherent to the purchase activity, etc., by the user. When, for example, a given user purchases the product at the store where a purchase of the product is available using U.S. dollar (a "store in U.S." below) among the stores that are participating the virtual shopping mall, the benefit issuing terminal 6 executes a process of issuing America points (US points) and giving the issued points to the user.

Moreover, a process of decreasing the US points given to the user in accordance with a purchase of the product by the user applying the US points is executed.

### <2. Functional Structure>

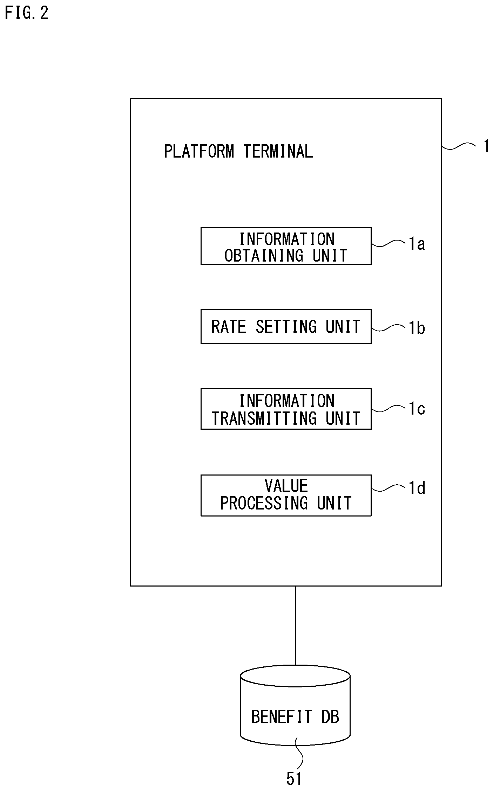

A functional structure of the platform terminal 1 will be described with reference to FIG. 2.

The platform terminal 1 includes an information obtaining unit la, a rate setting unit 1b, an information transmitting unit 1c, and a value processing unit 1d.

The information obtaining unit 1a executes a process of obtaining the information on the points owned by the user based on the identification information that can identify the user, e.g., a user IDentification (ID). The user ID is obtainable from, for example, the information input by the user.

Note that in this obtaining process, the point information in each economic block, such as Japan points (JP point) obtained at the store where a purchase of the product is available using Japanese YEN, and the above-described US point, etc., is obtained.

The rate setting unit 1b executes a process of obtaining the information on the currency exchange rate as appropriate, and of setting a number of points (value information) conversion rate (converting rate) between respective localities (i.e., between economic blocks that uses different currencies) in accordance with the currency exchange rate. When, for example, in accordance with the obtained currency exchange rate, 100 Japanese YEN is set to be equivalent to 1 U.S. dollar, 1 point of the JP point is 1 YEN, and 10 points of the US point are 1 dollar, a process of exchanging 10 points of the US point into 100 points of the JP point is executed.

Note that the information on the currency exchange rate is obtained from other information processing devices that are managing the currency exchange rate, e.g., the server device etc., that is managed by a brokerage company. An example obtaining method is to utilize the Application Programming Interface (API) function provided by the server device of a brokerage company.

Moreover, the setting of the conversion rate may include a service charge. When, for example, 3 % of the conversion points are deducted as the service charge, a process of converting 10 points of the US point into 97 points of the JP point is executed. However, since this conversion rate has the service charge taken into consideration, it cannot be adopted to an exchange in the reverse direction. In the exchange in the reverse direction, i.e., a conversion from the JP point to the US point, 100 points of the JP point is exchanged into 9.7 points of the US point (i.e., 97% of 10 points, and a value of 97 cents).

The information transmitting unit 1c executes, for example, a process of transmitting various pieces of information to be displayed in the payment procedure screen to be displayed on the user terminal 3 to which a purchase operation is being given. Execution of this process causes the payment procedure screen to be displayed on the screen of the user terminal 3 with predetermined information being included.

The value processing unit 1d executes a process of putting the points to use in the settlement amount based on applied point information designated by the user when a purchase of the product is made. More specifically, the value processing unit 1d notifies the benefit issuing terminal 6 of a putting of the points owned by the user to use in the settlement amount. Moreover, the value processing unit 1d causes the benefit issuing terminal 6 to execute a process of providing, to the store that is handling the purchased product, information necessary for the store when charging the settlement amount, i.e., a process of transmitting the information to the store terminal 5.

The platform terminal 1 manages a benefit DB 51 that stores the point information in each country (each economic block) for each user in order to execute the above-described various kinds of processes. That is, for example, the point information in each country is stored in the benefit DB 51 in association with each user ID. In addition, the benefit DB 51 may store, as the information on the user, a name, age, an address, a contact address (an e-mail address etc.,), and a telephone number.

Note that the functional structure illustrated in FIG. 2 can be considered as a structure indicating the function of the information processing system that includes the platform terminal 1 and the electronic-commerce server 4.

### <3. Hardware Configuration>

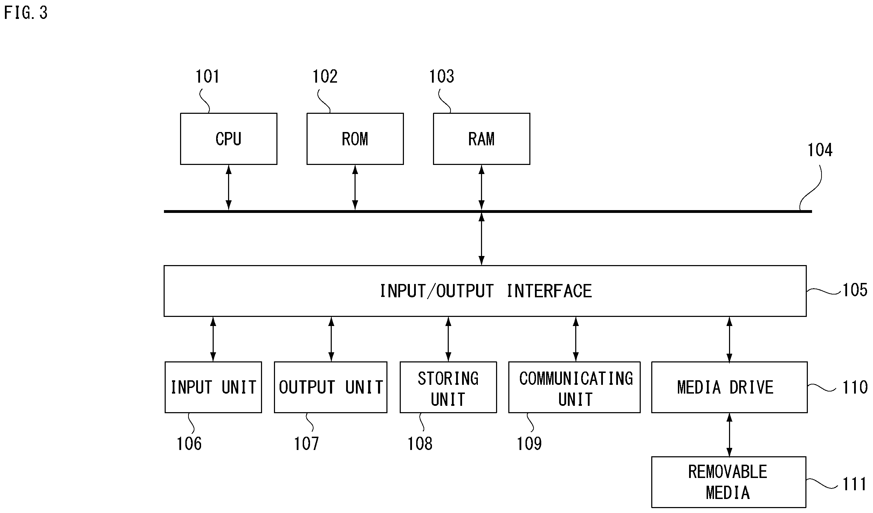

Each computer apparatus or terminal that accomplishes the platform terminal 1, the user terminal 3, the electronic-commerce server 4, the store terminal 5, and the benefit issuing terminal 6, and each device like the benefit DB 51 illustrated in FIG. 1 can be accomplished by a computer apparatus as illustrated in FIG. 3 and capable of executing an information processing and an information communication.

Note that it is unnecessary for all the computer apparatuses to include each unit illustrated in FIG. 3 without excess or deficiency, an apparatus that lacks a part of the structure, an apparatus that includes a plurality of a part of the structure, or an apparatus that employs a structure other than the structure illustrated in FIG. 3 is also appropriate.

In FIG. 3, a Central Processing Unit (CPU) 101 of a computer apparatus executes various kinds of processes in accordance with a program stored in a Read-Only Memory (ROM) 102 or the program loaded in a Random Access Memory (RAM) 103 from a storing unit 108. The RAM 103 also stores necessary data, etc., for the CPU 101 to execute various kinds of processes as appropriate.

The CPU 101, the ROM 102, and the RAM 103 are mutually connected with each other via a bus 104. An input/output interface 105 is also connected to this bus 104.

Connected to the input/output interface 105 are an input unit 106, an output unit 107, the storing unit 108, and a communicating unit 109.

The input unit 106 includes a keyboard, a mouse, and a touch panel, etc.

The output unit 107 includes a display, such as a Liquid Crystal Display (LCD), a Cathode Ray Tube (CRT), and an organic ELectroluminescence (EL) panel, and a speaker, etc.

The storing unit 108 includes a Hard Disk Drive (HDD), or flash memory device, etc.

The communicating unit 109 executes a communication process and a communication between the devices via the network 1.

A media drive 110 is connected to the input/output interface 105 as needed, and removable media 111, such as a magnetic disk, an optical disk, a magneto-optical disc, or a semiconductor memory, are loaded therein as appropriate, and information is written in or is read from the removable media 111.

According to such a computer apparatus, uploading or downloading of the data and of the program are executed by a communication via the communicating unit 109. Moreover, transfer of the data and of the program is enabled via the removable media 111.

The CPU 101 that executes processes in accordance with various kinds of programs accomplishes necessary information processing and communication for various computer apparatus and terminal as the platform terminal 1, the user terminal 3, the electronic-commerce server 4, the store terminal 5, and the benefit issuing terminal 6, and for the benefit DB 51.

Regarding various computer apparatus and terminal that accomplish the platform terminal 1, the user terminal 3, the electronic-commerce server 4, the store terminal 5, and the benefit issuing terminal 6, and an information processing device that accomplishes the benefit DB 51, they are not limited to a single computer apparatus as illustrated in FIG. 3, and may include a plurality of computer apparatuses integrated into a system. The plurality of computer apparatuses may be integrated into a system via a LAN, etc., or may be located remote from each other via a VPN, etc., that utilizes the Internet. A plurality of information processing devices may include an information processing device that is a server group (cloud) available by cloud computing service.

Each function as the platform terminal 1 illustrated in FIG. 2 is a function achieved by the CPU 101 of the information processing device that executes the process in accordance with the program. However, all of or a part of the process by each structure to be described later may be achieved by hardware.

Moreover, when each function is achieved by a software, it is unnecessary that each function is achieved by an individual program. A single program may execute processes for a plurality of functions, or a single function may be achieved by a combination of a plurality of program modules.

Furthermore, each function may be distributed in the plurality of information processing devices. Still further, one of the functions may be achieved by the plurality of information processing devices.

The benefit DB 51 of the platform terminal 1 can be achieved in any form as long as the platform terminal 1 is accessible. For example, the entire benefit DB 51 may be formed in a storing unit in the same system as the platform terminal 1, or a part of or the entire benefit DB 51 may be provided, for example, in a separated or remote computer system. Needless to say, it is unnecessary that the benefit DB 51 is formed in the single device (e.g., a single HDD). Moreover, it is unnecessary that the benefit DB 51 is formed as a single DB. Regarding each DB to be described in each following example, a storing unit for information relating to the process according to the embodiment is merely exemplified in the form of a single DB.

### <4. Outline of Process Flow>

With reference to an example illustrated in an accompanying figure, an outline of the flow of the process to be executed by each device will be described.

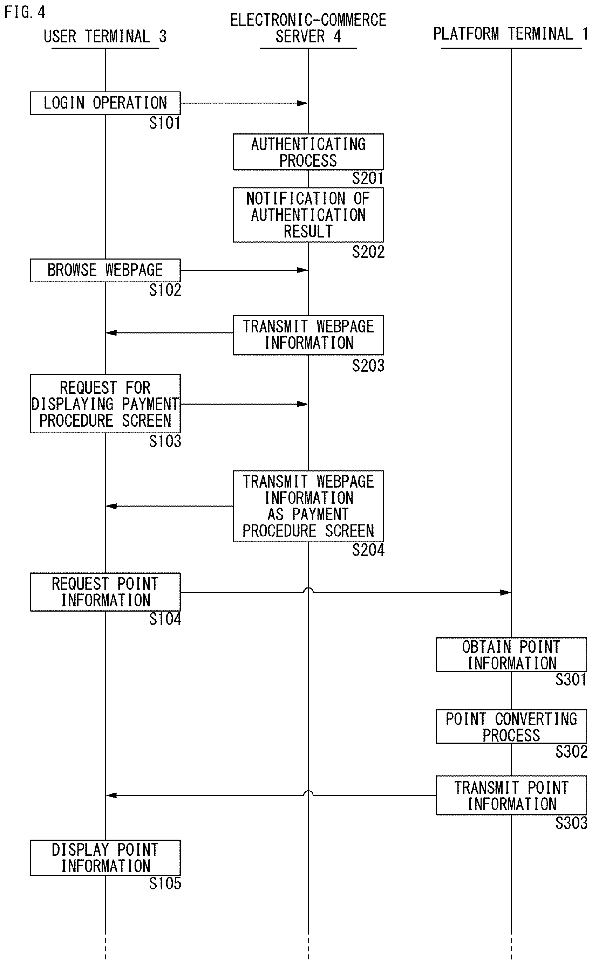

First, a flow until a user causes the payment procedure screen to be displayed will be described with reference to FIG. 4.

The user terminal 3 executes, in step S101, a process of receiving a user operation to display a log-in page. In this process, the user terminal 5 also executes a process of transmitting the input login information (e.g., the user ID and a password) to the electronic-commerce server 4.

When the login information is transmitted to the electronic-commerce server 4 from the user terminal 3, the electronic-commerce server 4 executes, in step S201, an authenticating process, and executes, in subsequent step S202, an authentication result notifying process.

More specifically, the electronic-commerce server 4 compares the user ID and the password both input from the user terminal 3 with the pieces of information stored in the DB (the DB managed by the electronic-commerce server 4, and for example, the user DB that stores the user information) to determine whether or not to permit the user login, and notifies the user terminal 3 of the authentication result. Note that when the authentication result is returned to the user terminal 3, the webpage data on the top page of a shopping website may also be transmitted. Accordingly, user authentication is executed, and the top page of the shopping website is displayed on the user terminal 3.

Note that the successive flow illustrated in FIG. 4 represents a case in which a determination to permit the login is made in the authenticating process in step S201. When a determination is made that the login is unpermitted in step S202, the user terminal 3 executes again the process in step S101, and the electronic-commerce server 4 executes the respective processes in step S201 and step S202 in accordance with such re-execution.

In accordance with an operation given by the user for browsing various webpages provided by the electronic-commerce server 4 via the user terminal 3, the user terminal 3 executes, in step S102, each process of browsing the webpage. This process is to transmit a request for the webpage information desired by the user to the electronic-commerce server 4.

In contrast, the electronic-commerce server 4 executes, in step S203, a process of obtaining the webpage information from the DB (e.g., the DB that stores the webpage information like HTML files provided for each product or each store), and of transmitting the obtained information to the user terminal 3.

Execution of the process in step S102 at the user terminal 3, and of the process in step S203 at the electronic-commerce server 4 causes the webpage desired by the user to be displayed on the display unit of the user terminal 3. The respective processes in step S102 and in step S203 may be executed multiple times in accordance with the user's operation.

Next, in accordance with the user's operation to display the payment procedure screen for purchasing the product that the user wants to purchase, the user terminal 3 requests, in step S103, the electronic-commerce server 4 for displaying the payment procedure screen.

According to this process, a transmission request for the webpage information is transmitted to the electronic-commerce server 4.

The electronic-commerce server 4 executes, in step S204, a process of obtaining the webpage information as the payment procedure screen from the DB (the DB that stores various kinds of webpage information), and of transmitting the obtained information.

This process causes the display unit of the user terminal 3 to display the payment procedure screen.

The payment procedure screen is a screen that enables at least a selection of the points to be applied to the purchase at this time among the points (the benefit) owned by the user.

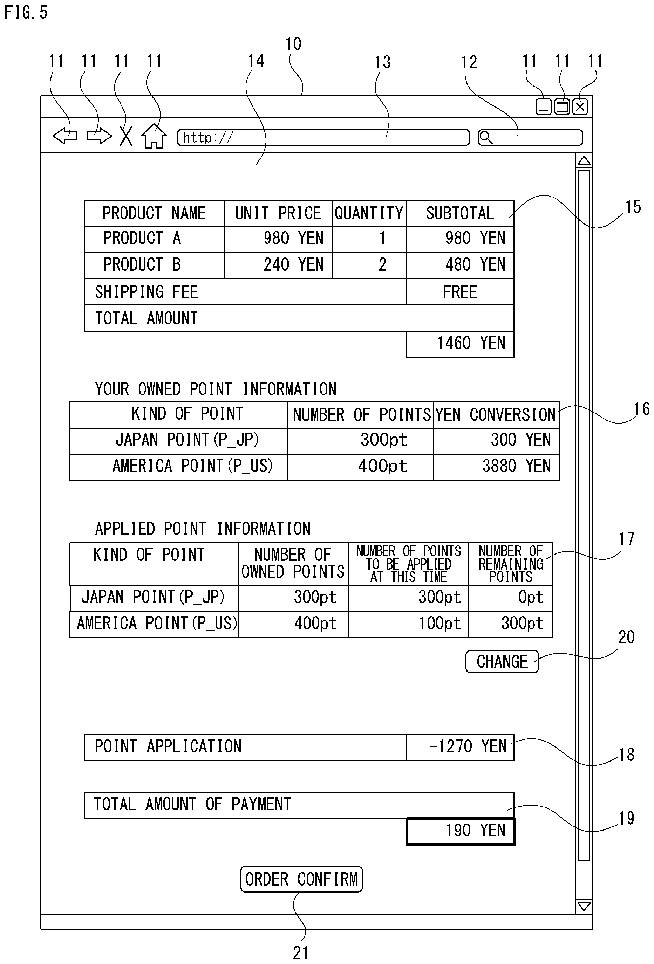

An example payment procedure screen will be described with reference to FIG. 5.

FIG. 5 illustrates a state in which the payment procedure screen is viewable using a web browser 10 that operates on the user terminal 3.

The web browser 10 is provided with various operating elements 11 for changing the webpage and for changing a display scheme. Moreover, a search form 12 for searching the webpage, and an address indicating field 13 that indicates the URL of the displayed webpage are provided.

Furthermore, a webpage display field 14 where the webpage is displayed is provided therebelow.

The webpage display field 14 is displaying the webpage that is the payment procedure screen, and is provided with a purchase information display field 15 that displays amount information on the purchase at this time, an owned-point-information display field 16 that displays point information which is owned by the user who is a purchaser, and which is for each country (each economic block), an applied-point-information display field 17 that displays the point information applied for the purchase at this time, a price-reduction-amount-by-point display field 18 that displays a price reduction amount reduced by the application of the points, and a payment amount information display field 19 that displays payment amount information to be paid by the user at this time.

Moreover, the webpage display field 14 is provided with a change button 20 which is an operating element operable by the user and which is to change the condition in which the points are applied.

Depression of the change button 20 enables the user to enter the number of applied points using an enter field and a dropdown list, etc.

Furthermore, the webpage display field 14 is provided with a confirm button 21 to confirm the order and the payment scheme with such information being displayed.

The displayed payment scheme is a state in which the user has designated the application of the points, etc.

Note that the payment procedure screen illustrated in FIG. 5 is merely an example. The payment procedure screen may further display an operating element to change shipping information and a shipping address, an operating element to designate a delivery day, an operating element to change a delivery scheme, information indicating the payment scheme, an operating element to change the payment scheme, and benefit information (information on a coupon or points) to be obtained by the user by the purchase at this time, etc.

The webpage information received by the user terminal 3 in accordance with the process in step S204 in FIG. 4 lacks, for example, information on the points. More specifically, among the respective display fields illustrated in FIG. 5, for example, information on the points to be displayed in the owned-point-information display field 16 is empty. Moreover, since the user has not designated the application of the points, respective values in the applied-point-information display field 17 and the price-reduction-amount-by-point display field 18 are also empty (or 0 YEN, etc., is displayed). Hence, the payment amount information display field is in a state in which information that is "1460 YEN" before the price reduction by the application of the points is being displayed.

In this state, the user terminal 3 executes a process of requesting the point information (step S104 in FIG. 4). In this process, information like the user ID to identify the user is transmitted to the platform terminal 1.

Note that the process in step S104 may be executed upon, for example, execution of the program contained in the webpage information received by the user terminal 3 in accordance with the process in step S204. For example, a program created by a programming language like Java (registered trademark) or a script language like JavaScript (registered trademark), which are operable on the browser basis, may be embedded in the webpage information as the payment procedure screen.

In accordance with transmission of the request for the point information from the user terminal 3 to the platform terminal 1, the platform terminal 1 obtains, in step S301, the point information. Regarding this process, for example, the program embedded in the webpage information is a program that utilizes the API function of the platform terminal 1, and when the user terminal 3 executes the program, the process is achieved.

In the process in step S301, the benefit information (the point information) for each user stored in the benefit DB 51 managed by the platform terminal 1 is obtained. Alternatively, a process of obtaining already-issued point information managed by the benefit issuing terminal 6, i.e., the point information already issued to the user who makes a purchase at this time may be executed.

The point information obtained in step S301 is, for example, information on the points owned by the user in each country (each economic block). According to this example, the user who makes a purchase at this time owns 300 points (pt) in the JP point (P_JP), and 400 points (pt) in the US point (P US).

The platform terminal 1 executes, in step S302, a point converting process. More specifically, this is a process of converting the value of the points of each country (each economic block) owned by the user who makes a purchase at this time into the currency (a currency available in a first locality) that is available at the store (purchase store) where the purchase at this time is to be made. This is a process of, when, for example, the currency that can be utilized at this purchase store is Japanese YEN, converting the value of the US point (the value applicable in a second locality) owned by the user into the value of Japanese YEN (the currency available in the first locality).

Note that in this process, a converting process having the currency exchange rate taken into consideration is executed. The detail will be described later.

Through the converting process in step S302, when, for example, 1 point of the JP point is set to be 1 YEN, 10 points of the US point is set to be 1 dollar, and Japanese 100 YEN is equivalent to U.S. 1 dollar in the currency exchange rate, a calculation is made such that 400 points of the US point can be converted into 4000 YEN in Japanese YEN.

Note that a service charge may be taken into consideration at the time of conversion. When, for example, a service charge that is 3 % is taken to convert points applicable in a given country (economic block) into points applicable in a different country (different economic block), since 3 % of 400 points of the US points are deduced as the service charge, substantially 388 points becomes subjected to the conversion. That is, in consideration of the service charge, 400 points of the US point can be converted into 3880 YEN in Japanese YEN.

Moreover, instead of the conversion into the currency available at a store (purchase store) where a purchase is to be made, a conversion into points (values) applicable at the store (purchase store) where the purchase is to be made may be executed. More specifically, according to this example, the US point may be converted into the JP point.

For example, 400 points of the US point may be converted into 4000 points of the JP point. Alternatively, in consideration of the service charge, 400 points of the US point may be converted into 3880 points of the JP point.

The platform terminal 1 executes, in step S303, a process of transmitting the point information to the user terminal 3. The point information transmitted in this process indicates that, for example, the owned points by the user is 300 points of the JP point, and 400 points of the US point, and that 400 points of the US point have a value equivalent to 4000 YEN in Japanese YEN (or a value equivalent to 3880 YEN when the service charge is subtracted).

The user terminal 3 executes, in step S105, a process of displaying the point information based on the received information. This causes the screen of the user terminal 3 to display the point information in the owned-point-information display field 16 (see FIG. 5). Moreover, in accordance with an operation that the user sets the points to be applied, the information on the applied points is displayed in the applied-point-information display field 17.

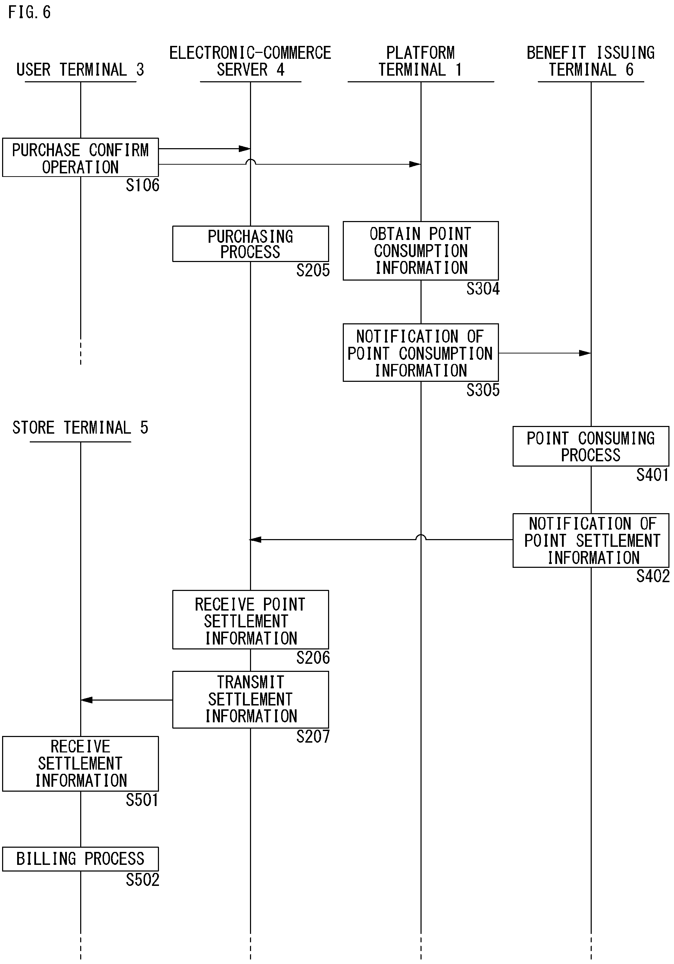

An outline of a flow of a process executed by each information processing device when the user depresses the confirm button 21 to confirm an order in the state illustrated in FIG. 5 will be described with reference to FIG. 6.

The user terminal 3 receives, in step S106, a purchase confirm operation, and transmits information to the electronic-commerce server 4 and to the platform terminal 1.

In accordance with the process in step S106, the electronic-commerce server 4 receives the information on the shipping address, the information on the delivery day, and the information on the payment scheme, etc., and executes, in step S205, a purchasing process.

In the purchasing process, a process of notifying the store terminal 5 of the sales of the product, a process of notifying a distribution base (a warehouse, etc.) where the product sold at this time is in stock of the information on the delivery, etc., are executed.

Conversely, the platform terminal 1 obtains, in step S304, the information on the applied points (point consumption information) from the information received in accordance with the process in step S106.

The point consumption information obtained in step S304 indicates the kind of points applied in the purchase at this time and the number of such points.

The point consumption information obtained in this step may be point consumption information calculated again based on the currency exchange rate at the time point at which the purchase confirm operation is made, or may be point consumption information already calculated based on the currency exchange rate referred when the payment procedure screen is presented to the user. According to this example, the point consumption information is based on the currency exchange rate when the payment procedure screen is presented.

Note that in the example illustrated in FIG. 6, an example structure has been described in which the user terminal 3 transmits necessary information for the purchasing process to the electronic-commerce server 4, and the user terminal 3 transmits the information on the applied points to the platform terminal 1. However, other schemes are applicable.

For example, the user terminal 3 may transmit pieces of the information on the points necessary for the purchasing process and on the applied points to the electronic-commerce server 4, and the electronic-commerce server 4 that has received these pieces of information may transmit the applied point information to the platform terminal 1 as needed.

The platform terminal 1 that has obtained the point consumption information executes, in step S305, a process of notifying the benefit issuing terminal 6 of the point consumption information. Through this process, the benefit issuing terminal 6 grasps that at least some of the issued points are consumed, and executes, in step S401, a point consuming process. Accordingly, a subtracting process on the points owned by the user is executed.

Note that when the point consuming process in step S401 is executed using the point consumption information already calculated based on the currency exchange rate referred when the payment procedure screen is presented to the user, the currency exchange rate before the time point at which the user made the purchase confirm operation is applied. Accordingly, when the value of the US point owned by the user increases or decreases at the time point at which the purchase confirm operation is made, the user may incur a loss or may achieve a profit.

However, by adopting the conversion rate presented to the user over the payment procedure screen, since a process of subtracting the points as the consumed points grasped by the user can be executed in step S401, no divergence occurs in the user's recognition. That is, a case is avoided in which the user recognizes that U.S. 100 points are consumed by designating U.S. 100 points at the purchase of the product, but a change in currency exchange rate occurs because of the displacement between the timing at which the payment procedure screen is displayed and the timing at which the purchase is confirmed, and U.S. 110 points are applied in practice.

Alternatively, a divergence in recognition such that the user recognizes that U.S. 100 points are consumed by designating the application of U. S. 100 points at the purchase of the product and a payment by 1000 YEN occurs, but a payment by 1100 YEN together with the consumption of U.S. 100 points occurs in practice is avoided.

Note that when there is a benefit to be obtained by the purchase at this time, the platform terminal 1 may give a notification of the benefit information obtained in step S305. In this case, the benefit issuing terminal 6 may execute, in step S401, a point obtaining process together with the point consuming process.

The benefit issuing terminal 6 executes, in step S402, a point settlement information notification to notify the electronic-commerce server 4 of a change of the point information owned by the user to the proper information on which the point information applied at this time is reflected.

The electronic-commerce server 4 receives, in step S206, the point settlement information notification, and transmits, in step S207, settlement information. The transmitting process of this settlement information is a process of transmitting, to the store terminal 5, various information necessary for the purchase store to create a billing statement issued to each relevant association.

The store terminal 5 receives, in step S501, the settlement information, and executes, in step S502, a billing process. This enables the store terminal 5 to execute billing for each relevant association to obtain the amount of money in accordance with the sold product.

### <5. Respective Processes>

In order to achieve the process flows illustrated in FIG. 4 and FIG. 6, respective processes executed by the platform terminal 1 will be described with reference to the accompanying figures.

### <5-1. Point Converting Process>

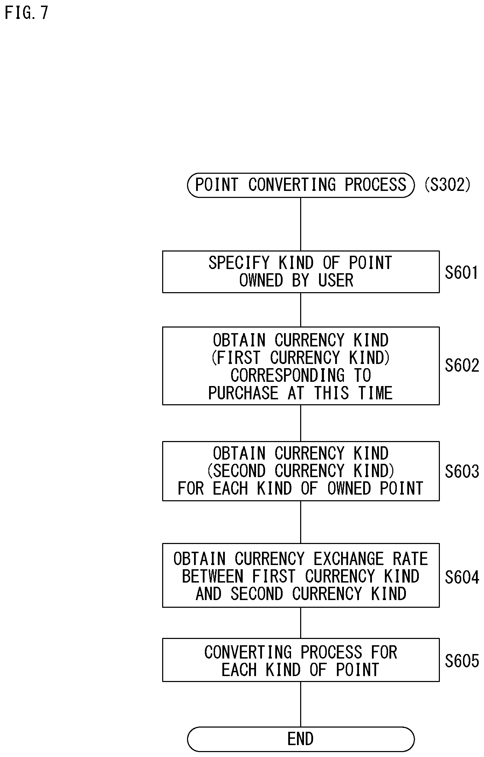

A specific example of the point converting process in step S302 described with reference to FIG. 4 will be described with reference to FIG. 7. It is assumed that, when the point converting process in FIG. 7 is executed, the platform terminal 1 has already obtained the point information of each country (each economic block) owned by the user who attempts to make a purchase at this time.

The platform terminal 1 specifies, in step S601, the kind of points owned by the user. The kinds of points are the JP point, and the US point, etc.

The platform terminal 1 specifies, in step S602, the kind of currency corresponding to the purchase at this time as a first currency kind. When, for example, the purchase store at this time is a store in Japan, "Japanese YEN" that is a currency kind in Japan is specified as the currency kind available at the purchase store.

Note that although it is a store in Japan, when the available currency kind is "U.S. dollar" that is a currency kind in America, "U.S. dollar" is specified in step S602.

Moreover, when multiple kinds of currencies are available at the purchase store, the multiple kinds of currencies may be specified.

According to this example, a case will be described in which "Japanese YEN" is specified as the first currency kind.

The platform terminal 1 specifies, in step S603, the currency kind for each kind of the owned points as a second currency kind.

A case will be described in which the user's owned points are the JP point and the US point. Since the JP point is convertible into the value of Japanese YEN regardless of the currency exchange rate, the currency kind corresponding to the JP point is specified as "Japanese YEN". Moreover, since the US point is convertible into the value of U.S. dollar regardless of the currency exchange rate, the currency kind corresponding to the US point is specified as "U.S. dollar."

That is, according to this example, "Japanese YEN" and "U.S. dollar" are specified as the second currency kind corresponding to the points owned by the user.

The platform terminal 1 obtains, in step S604, the currency exchange rate for the first currency kind and the second currency kind. As described above, the first currency kind according to this example is "Japanese YEN", and the second currency kinds are "Japanese YEN" and "U.S. dollar". Since there is no currency exchange rate between "Japanese YEN" and "Japanese YEN", in the process in step S604, the currency exchange rate for "Japanese YEN" and "U.S. dollar" is obtained.

Note that when there are equal to or greater than three second currency kinds, multiple currency exchange rates are obtained. Moreover, when there are the multiple first currency kinds, the currency exchange rate is obtained for each combination of the first currency kind with the second currency kind.

The platform terminal 1 executes, in step S605, the converting process for each kind of points.

First, a case in which the service charge is not taken into consideration will be described.

When, for example, regarding the details of the points owned by the user, as illustrated in FIG. 5, the user owns 300 pt in the JP point and 400 pt in the US point, 1 pt in the JP point is equivalent to 1 YEN in Japanese YEN, 10 pt in the US point is equivalent to 1 dollar in the U.S. dollar, and 1 dollar is equivalent to 100 YEN in accordance with the currency exchange rate, since 400 pt in the US point is equivalent to 40 dollars, when it is converted into Japanese YEN, the user owns the value equivalent to 4000 YEN. That is, in the converting process in step S605, it is calculated that 400 pt in the US point is converted into 4000 YEN in Japanese YEN.

Next, a case in which a service charge that is, for example, 3% is collected as a predetermined service charge will be described.

Since the payment by Japanese YEN is available at the purchase store at this time, the JP point owned by the user can be directly applied as the JP point, and no service charge is collected. In contrast, it is necessary to convert the US point into the value of Japanese YEN for the payment by Japanese YEN available at the purchase store at this time. Hence, when the US point is applied, 3% of the applied points is collected as the service charge.

That is, since 400 pt in the US point owned by the user is 97% of the value when converted in the JP point, the number of points to be converted is set to 388 pt.

When 388 pt of the US point is converted into Japanese YEN in consideration of the currency exchange rate, it becomes 3880 YEN.

Note that the process in step S605 is merely to calculate the value when a conversion into Japanese YEN is executed, and the US point is not actually exchanged to the JP point.

Since the points are not actually exchanged, when, for example, the user cancels the purchase of the product at this time, the point exchange is not executed again. That is, an occasion in which the owned benefit by the user is reduced by the service charge that is necessary at the time of exchange is avoided.

By executing the respective processes from step S601 to step S605, the value of the US point owned by the user and when converted into Japanese YEN is calculated, and the calculated value is transmitted to the user terminal 3 in step S303 in FIG. 4.

The user terminal 3 executes a display process based on the received information, and thus the value when converted into Japanese YEN for each point kind is displayed in the owned-point-information display field 16 illustrated in FIG. 5.

### <5-2. Purchase Confirm Information Receiving Process>

The point consumption information obtaining process and the point consumption information notifying process executed by the platform terminal 1 in step S304 and in step S305 in FIG. 6 are executed as a part of the sequential processes executed as, for example, a purchase confirm information receiving process.

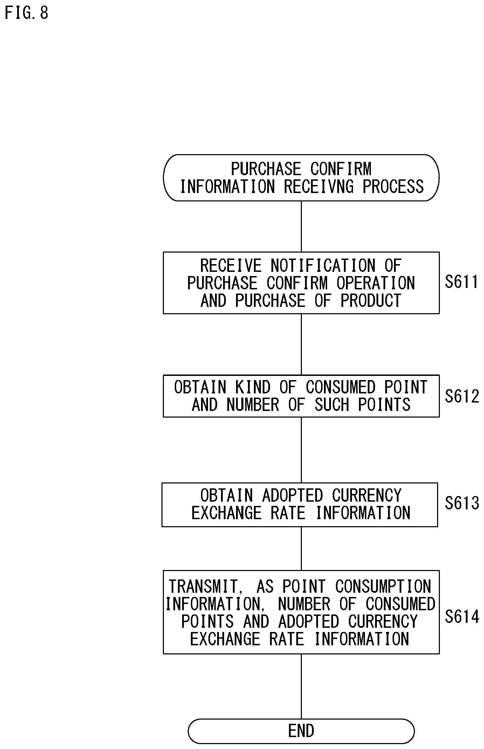

An example purchase confirm information receiving process will be described with reference to FIG. 8.

The platform terminal 1 receives, from the user terminal 3 in step S611, a notification to the effect that the purchase confirm operation is given and the product is purchased at the user terminal 3.

The platform terminal 1 executes, in step S612, a process of obtaining, from the received information, the consumed point information that contains the kind of consumed points and the number of such points.

Moreover, the platform terminal 1 executes, in step S613, a process of obtaining the adopted currency exchange rate information from the received information.

The information obtained in step S612 is, for example, both information that are the kind of points like the US point, and the number of consumed points. Moreover, when multiple kinds of points are consumed, information on the kind of point and on the number of consumed points are obtained for each kind.

The currency exchange rate information obtained in step S613 is the information on the currency exchange rate adopted when the payment procedure screen illustrated in FIG. 5 is presented to the user, i.e., the information on the currency exchange rate adopted when the information on the number of points to be displayed in the owned-point-information display field 16 is calculated.

The platform terminal 1 executes, in step S614, a process of transmitting the kind of consumed points and the number of such points obtained in step S612, and the currency exchange rate information obtained in step S613 to the benefit issuing terminal 6.

When the benefit issuing terminal 6 receives this information, the point consuming process in step S401 and the notifying process of the point settlement information in step S402 as illustrated in FIG. 6 are enabled. In particular, in the notifying process in step S402, the point settlement information using the currency exchange rate adopted when the payment procedure screen is presented to the user is transmitted.

For example, a notification to the effect that 100 points of the US point are applied for the purchase at this time as illustrated in FIG. 5, and the payment by 970 YEN is made by the point application is given.

Note that the platform terminal 1 may only transmit the information necessary for the point consuming process to the benefit issuing terminal 6. For example, the platform terminal 1 may transmit only the information obtained in step S612 (i.e., information on the kind of consumed points and on the number of such points) to the benefit issuing terminal 6.

In such a case, the currency exchange rate information obtained in step S613 may be transmitted to the electronic-commerce server 4.

The electronic-commerce server 4 may receive, as the point settlement information, the consumed point information (the information on the kind of points and on the number of points) from the benefit issuing terminal 6, and may calculate the amount of money paid by the points using the currency exchange rate information received from the platform terminal 1.

According to such a structure, also, the settlement information transmitting process in step S207 is executable.

Note that the currency exchange rate information obtained in step S613 may directly indicate the value of the currency exchange rate, or may be time information that indicates a time point at which the currency exchange rate is adopted. Such information may be time information that specifies the currency exchange rate between Japanese YEN and U.S. dollar at, for example, 2:35:41 p.m. on October 12, 2018.

### <6. Modified Example>

Modified examples for the above-described respective processes will be described.

### <6-1. Modified Example for Presenting Timing of Payment Procedure Screen>

The electronic-commerce server 4 transmits, in the process in step S204 illustrated in FIG. 4, the webpage information as the payment procedure screen.

In the above-described example, a case in which the webpage information that does not contain the point information is transmitted has been described. That is, an example has been described in which the program contained in the webpage information is executed through the process by the user terminal 3 that has received the webpage information, and the point information is obtained from the platform terminal 1.

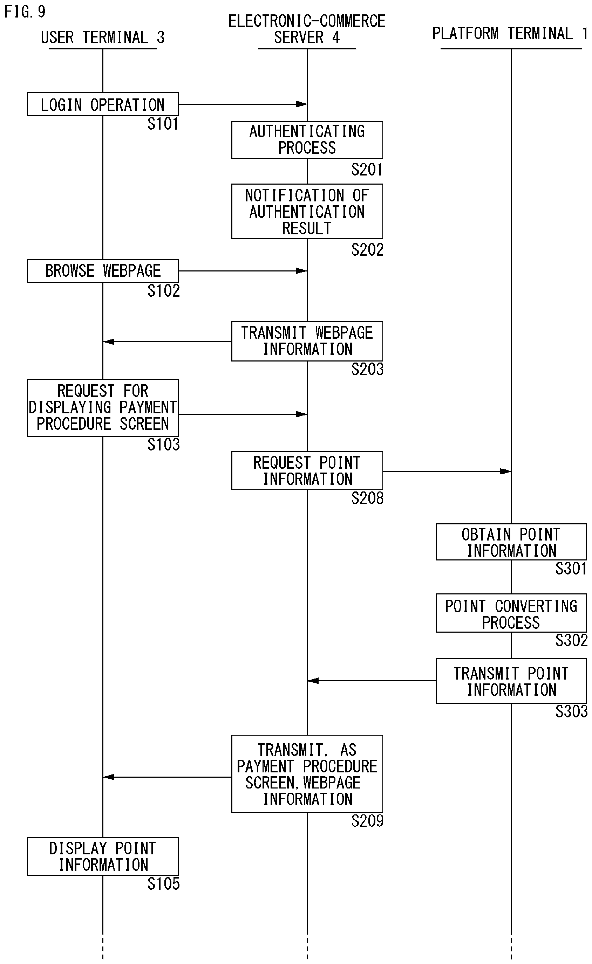

According to this modified example, an example will be described in which, when the point information is obtained through the process by the electronic-commerce server 4, the webpage information that contains the point information is transmitted to the user terminal 3 (see FIG. 9).

The respective processes in steps S101, S102, and S103 executed by the user terminal 3, and the respective processes in steps S201, S202, and S203 executed by the electronic-commerce server 4 are the same processes as those illustrated in FIG. 4, and thus the description thereof will be omitted.

When the user terminal 3 transmits a request for displaying the payment procedure screen to the electronic-commerce server 4, the electronic-commerce server 4 executes, in step S208, a process of requesting the point information. In this process, for example, a user ID to identify the user is transmitted.

The platform terminal 1 that has received the request for the point information transmits the obtained point information by executing the respective processes in steps S301, S302, and S303.

This process is the same process as each process in step S301, S302, and S303 in FIG. 4. However, the transmission destination of the information is not the user terminal 3 but the electronic-commerce server 4.

The electronic-commerce server 4 that has received the point information executes, in step S209, a process of transmitting the webpage information that contains the point information to the user terminal 3.

This causes the payment procedure screen to be displayed on the screen of the user terminal 3 etc., using the web browser, etc.

### <6-2. First Modified Example of Owned-Point-Information Display Field>

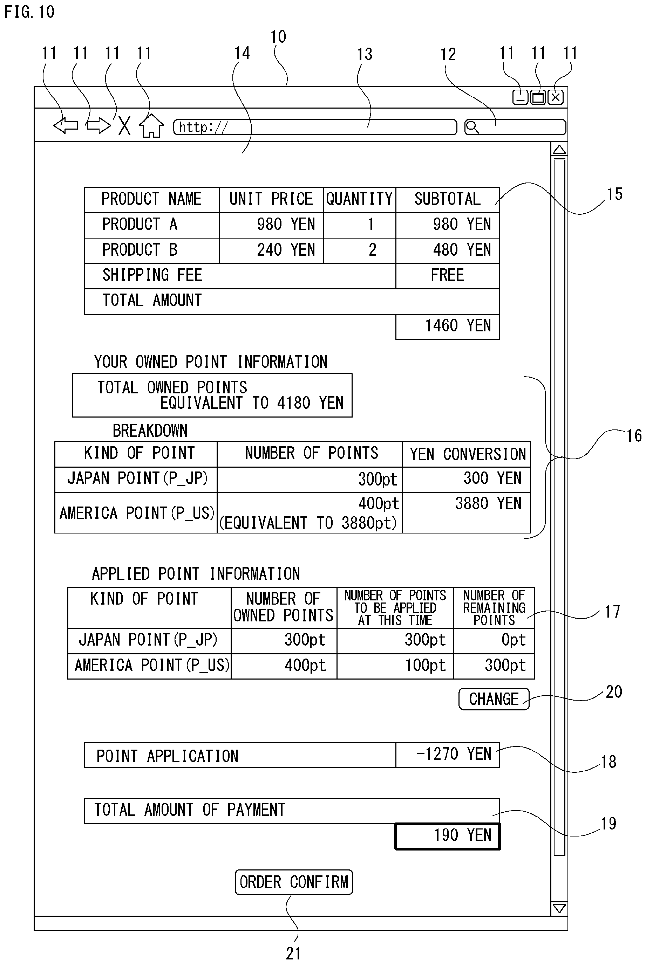

The payment procedure screen illustrated in FIG. 5 is merely an example. In this modified example, a different display form from the above-described example will be described with reference to FIG. 10.

According to a first modified example of the owned-point-information display field 16, a value when the multiple kinds of points owned by the user are collectively converted into the first currency kind is displayed on the owned-point-information display field 16.

For example, the user who owns the multiple kinds of points desires to grasp how much amount of money is to be paid by the points for the purchase at this time. In response to such a desire, by eliminating a difference in the kinds of points and by presenting, to the user, the total amount of the value of the owned points that are collectively converted into the first currency kind, the user can properly grasp the value of the points, thereby enhancing the user friendliness for the user.

### <6-3. Second Modified Example of Owned-Point-Information Display Field>

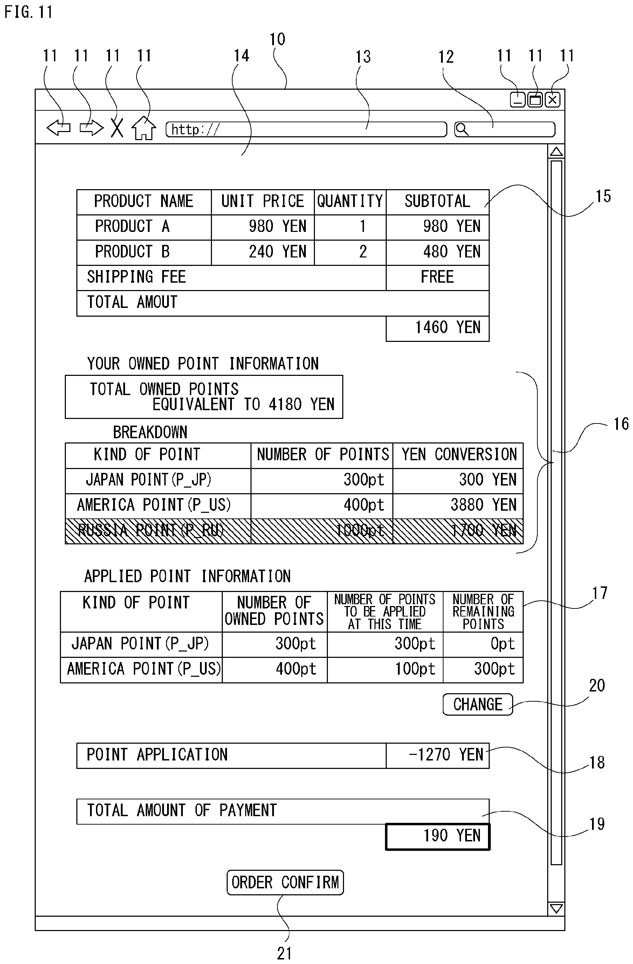

A second modified example of the owned-point-information display field 16 will be described with reference to FIG. 11.

In the second modified example of the owned-point-information display field 16, the applicable kind of the point among the multiple kinds of points owned by the user is made as identifiable.

For example, as illustrated in FIG. 11, among the multiple kinds of points owned by the user, a Russia point (RU point, P_RU) that is not applicable for the purchase of the product at this time may be displayed in gray-out state (a part indicated by oblique hatching).

Note that for the purchase at this time, since the JP point or the US point are applicable and the RU point is not applicable, the applied-point-information display field 17 displays only the JP point and the US point.

Note that information on the non-applicable kind of point may be not presented to the user. For example, the payment procedure screen illustrated in FIG. 5 may be presented to the user who owns the RU point.

The applicable kind of point may be decided in accordance with the first currency kind. When, for example, the purchase store is a store where only Japanese YEN can be utilized, the applicable points may be limited to the JP point and to the US point, and when the purchase store is a store where only U.S. dollar can be utilized, the applicable points may be limited to the US point and to an Euro point (an EU point, P_EU).

Moreover, the applicable kind of point may be decided by the service that can be provided by the information processing device like the electronic-commerce server 4. In the case of, for example, the electronic-commerce server 4 that provides a product sales service which utilizes a virtual shopping mall, the applicable points may be limited to the JP point and to the US point. In the case of the electronic-commerce server 4 that provides a travel service which serves for reservation of a staying place and for an arrangement of a ticket to utilize a transportation service (an airplane, a train, and a taxi) for a travel, the JP point and the US point are applicable, and the point corresponding to a currency available in a traveling country (or economic block) may be further made as applicable.

Alternatively, the applicable kind of point may be decided by a ranking of the user. The term "ranking" according to this example is to be given to each user upon grouping and classifying the user in accordance with, for example, the utilization frequency of the service and with the utilized amount of money. For example, the user who utilizes the service frequently is classified into an "A rank", the user who has utilized the service is classified into a "B rank", and the user who has not utilized the service is classified into a "C rank". The B rank is a higher ranking than the C rank, and the A rank is a higher ranking than the B rank.

The higher the ranking of the user is, the more the kinds of point may be made as applicable. For example, only the JP point may be applicable for the user in the C rank, the JP point and the US point may be applicable for the user in the B rank, and the JP point, the US point, and the EU point may be applicable for the user in the A rank.

### <6-4. Third Modified Example of Owned-Point-Information Display Field>

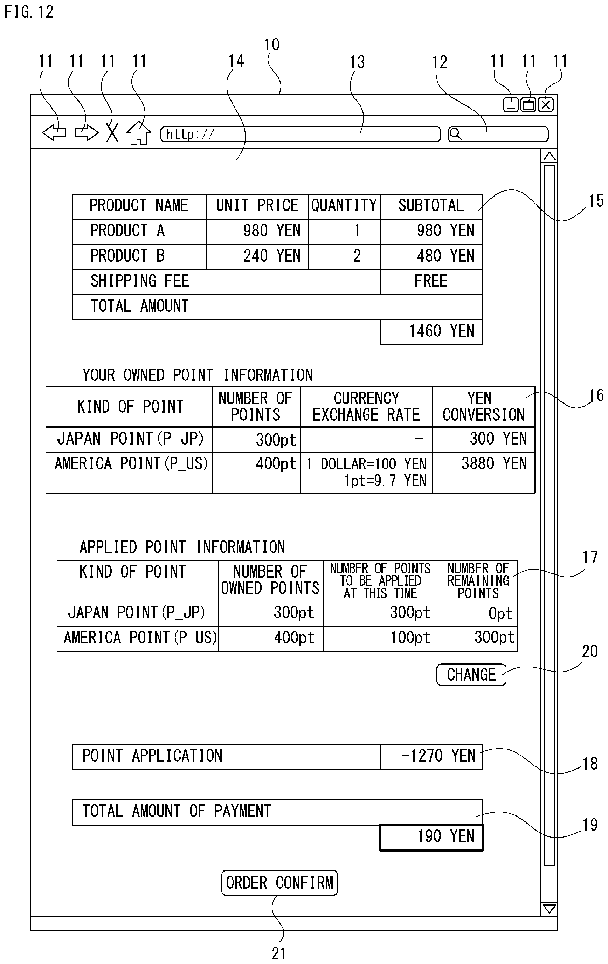

A third modified example of the owned-point-information display field 16 will be described with reference to FIG. 12.

According to the owned-point-information display field 16 of the third modified example, the currency exchange rate to the first currency kind is displayed for each of the multiple kinds of points owned by the user.

More specifically, as indicated in the owned-point-information display field 16 in FIG. 12, it is clarified that 400 pt in the US point owned by the user is equivalent to 3880 YEN (however, the service charge is 3 %) based on the currency exchange rate (US 1 dollar is equivalent to 100 YEN).

This enables the user to grasp the loss or profit by application of the US point.

### <6-5. Fourth Modified Example of Owned-Point-Information Display Field>

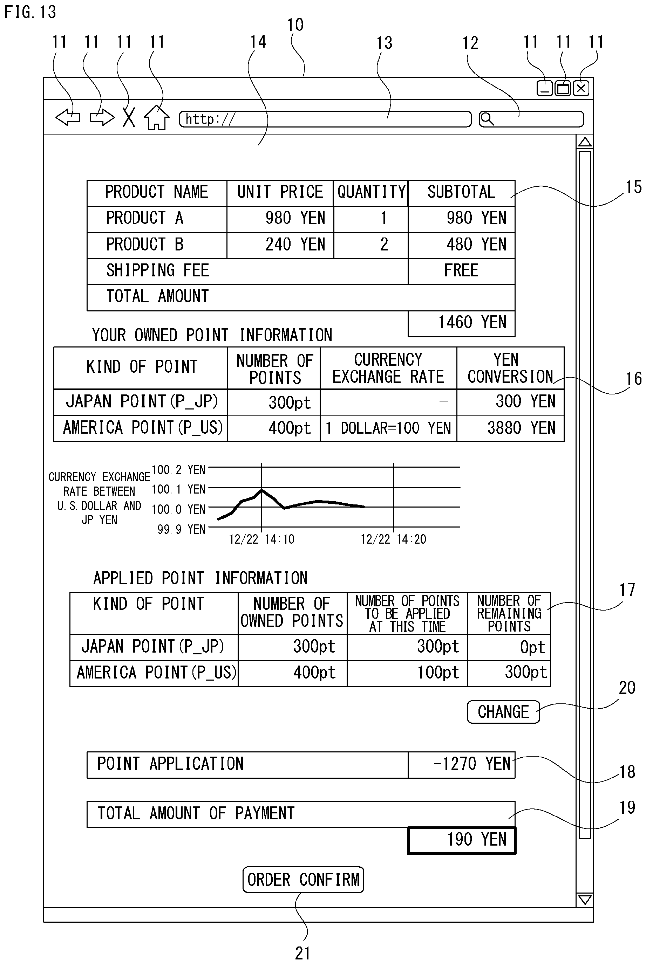

A fourth modified example of the owned-point-information display field 16 will be described with reference to FIG. 13.

According to the owned-point-information display field 16 of the fourth modified example, a change in the currency exchange rate adopted when the information is displayed on the owned-point-information display field 16 is displayed.

According to the example illustrated in FIG. 13, a change in the currency exchange rate is displayed as a graph. In addition, an increase tendency or a decrease tendency may be displayed along with an arrow, etc.

By presenting the changing state of the currency exchange rate in the payment procedure screen, an indicator when the user decides the kind of point to be applied can be given, and thus the user friendliness is enhanced. Moreover, by visually presenting a change in the points owned by the user due to the change in the currency exchange rate depending on the purchase timing, a factor like a game can be added to a purchase activity, and thus the user's purchase intent is motivated.

### <6-6. First Modified Example of Applied-Point-Information Display Field>

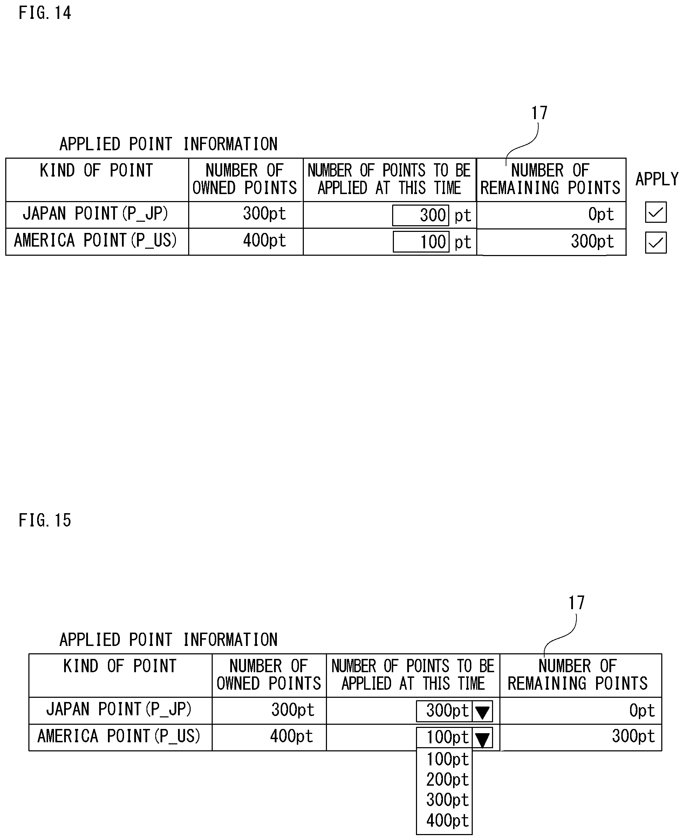

A first modified example of the applied-point-information display field 17 will be described with reference to FIG. 14.

In the above-described example (FIG. 5) of the applied-point-information display field 17, the applied points are changed by depressing the change button 20.

According to this example, the display section of the number of points to be applied at this time in the applied-point-information display field 17 is an enter field, and by entering a numerical value in this enter field, the number of points to be applied at this time can be changed.

Moreover, as illustrated in FIG. 14, a check box for whether or not to apply the point is provided at the right side for each kind of the owned point. When the check box is unchecked, the application of the corresponding kind of point, i.e., the entry of the numerical value in the enter field is invalidated.

### <6-7. Second Modified Example of Applied-Point-Information Display Field>

A second modified example of the applied-point-information display field 17 will be described with reference to FIG. 15.

According to this example, a drop-down list is provided at the display section of the number of points to be applied at this time in the applied-point-information display field 17, enabling an entry of a numerical value.

Note that in the example in FIG. 15, although a setting is enabled 100 pt by 100 pt, a setting based on a further fine unit may be enabled.

Moreover, the number of points that exceeds the purchase amount at this time may be made non-displayed. Furthermore, in this case, the maximum value that is the number of points equivalent to the purchase amount at this time may be made selectable.

Note that according to the first modified example illustrated in FIG. 14, the enter of the numerical value that exceeds the maximum number of applicable points may be disabled.

Note that in addition to the examples illustrated in FIG. 14 and FIG. 15, a numerical value may be entered using a slider, or the numerical value may be entered by operating icons to increment and decrement the numerical value one by one.

### <6-8. Third Modified Example of Applied-Point-Information Display Field>

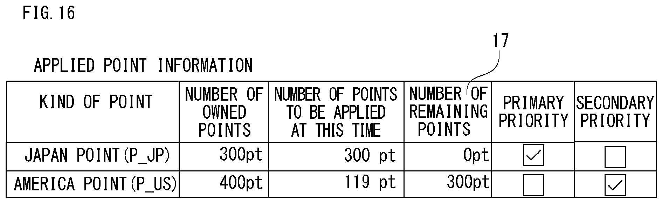

A third modified example of the applied-point-information display field 17 will be described with reference to FIG. 16.

A feature according to this example is not to enter the numerical value of the applied points. More specifically, as illustrated in FIG. 16, a check box that enables a setting of a priority order is provided for each kind of owned point. This check box is provided with a check box that indicates a primary priority, and a check box that indicates a secondary priority.

In the state illustrated in the figure, the JP point is the primary priority and the US point is the secondary priority. In this state, when the confirm button 21 (see FIG. 5) is depressed, the JP point that is set as the primary priority is preferentially applied. When the purchase price is higher than the value of the JP point, the US point that is set as the secondary priority is then applied. At this time, the US point of the maximum applicable value may be applied. That is, a setting may be made which causes the amount of money to be paid by the user in Japanese YEN to become close to 0 YEN as much as possible.

More specifically, the state illustrated in FIG. 16 indicates that, when the amount of money for the purchased product is 1460 YEN, 300 pt in the JP point (i.e., 300 YEN) and 119 pt in the US point (i.e., 1154 YEN) are put to use in the settlement amount. In this case, the remaining amount of money to be paid by the user is 6 YEN (1460 - 300 - 1154).

Note that application of 119 pt in the US point is an example case in which, when the owned points by the user are converted into the value of Japanese YEN, an attempt is made so as to avoid a loss that is equal to or higher than the minimum unit (1 YEN). That is, although 119 pt has the value equivalent to 1154.3 YEN, and 1154 YEN from which 0.3 YEN is subtracted is put to use in the settlement amount.

Alternatively, a calculation may be made in such a way that the purchase amount of money is to be paid by the points as much as possible. For example, with 120 pt in the US point (i.e., 1164 YEN) and 296 pt in the JP point (i.e., 296 YEN) being put to use, all the settlement amount may be to be paid by the points.

### <7. Summary>

As described above with reference to the respective examples, the platform terminal 1 that is an information processing device includes the information obtaining unit 1a that obtains, from the value managing device (the benefit issuing terminal 6 or the benefit DB 51), information on a value for each locality (information on the JP point). The information is associated with the identification information of a user (e.g., the user ID) who uses the terminal device (the user terminal 3). The value for each locality corresponds to a currency value for each locality (for each country or for each economic block) (e.g., a value of Japanese YEN). That is, the benefit information for each user is obtained regardless of the unit of currency available at the purchase store.

The platform terminal 1 that is the information processing device includes the rate setting unit 1b which obtains the information on the currency exchange rate consecutively, and which sets the conversion rate for the values (e.g., the points) between the localities. The conversion rate may be the currency exchange rate with the service charge being taken into consideration.

Moreover, the platform terminal 1 that is the information processing device includes the information transmitting unit 1c that transmits the information on a value applicable for the user based on the value for each locality obtained by the information obtaining unit 1a (e.g., the information on the JP point and the information on the US point). The information is information necessary for causing the terminal device (the user terminal 3) to present the payment procedure screen (see FIG. 5, etc.) for the electronic-commerce by the currency (Japanese YEN) in the first locality (e.g., Japan) between the terminal device (the user terminal 3) and the service server (e.g., the electronic-commerce server 4). Accordingly, displayed on the user terminal 3 is at least the information on the benefit applicable for the user.

Furthermore, the platform terminal 1 that is the information processing device includes the value processing unit 1d that executes, in response to a request for applying the value of the second locality (e.g., America) other than the first locality (e.g., Japan) upon a user operation (e.g., to depress the confirm button 21) through the payment procedure screen, a process of converting the applied value of the second locality into the currency value of the first locality by the conversion rate at a predetermined time point (e.g., the predetermined time point before the user operation) and of putting the converted currency value to use in the settlement amount in the electronic-commerce.

That is, the owned points are converted into the currency value of the first locality by adopting not the currency exchange rate at the time point at which an operation of actually requiring the application of the value (the operation of depressing the confirm button 21) but the currency exchange rate before that time point, and are put to use in the settlement amount. Accordingly, since a strict real-time nature is not required, the process load on the platform terminal 1 that is the information processing device can be reduced. More specifically, it is unnecessary to execute a process of obtaining the currency exchange rate information highly frequently, etc.

Moreover, according to the conventional technologies, the converting process in accordance with the unit of currency that is to be used at the time of a purchase of the product is executed in advance on the value owned by the user. In this case, there is a tendency such that the value is reduced when applied. According to the present structure, by executing the real-time converting process without executing the converting process in advance, a change in the value of the points owned by the user can be reduced.

Furthermore, when the converting process is executed in advance, the user may be allowed to select the timing at which the converting process is executed by presenting the currency exchange rate for each second, etc. In such a case, there is a tendency such that relatively highly frequent obtainment of the currency exchange rate is necessary, and the process load may increase. Moreover, relatively highly frequent obtainment of the currency exchange rate tends to increase a communication traffic. In this point, also, according to the present structure, since obtainment of the currency exchange rate can be done by once by adopting the currency exchange rate at the predetermined time point, the process load on the information processing device can be reduced, and an increase in the communication traffic can be suppressed.

The above-described respective effects are also achievable in an information processing system that includes the platform terminal 1 and the electronic-commerce server 4.

The information processing system includes, for example, the information obtaining unit 1a that obtains, from the value managing device (the benefit issuing terminal 6 or the benefit DB 51), information on a value for each locality (information on the JP point), the information being associated with the identification information of a user (e.g., the user ID) who uses the terminal device (the user terminal 3), the value for each locality corresponding to a currency value for each locality (for each country or for each economic block) (e.g., a value of Japanese YEN), the rate setting unit 1b which obtains the information on the currency exchange rate consecutively, and which sets the conversion rate for the values (e.g., the points) between the localities, the information transmitting unit (e.g., the information transmitting unit of the electronic-commerce server 4) that transmits to the terminal device (the user terminal 3), the webpage information to display the payment procedure screen for electronic-commerce by the currency of the first locality, together with the information on the value applicable for the user based on the value for each locality obtained by the information obtaining unit 1a, and the value processing unit 1d that executes, in response to a request for applying the value of the second locality (e.g., America) other than the first locality (e.g., Japan) upon the user operation (e.g., to depress the confirm button 21) through the payment procedure screen, a process of converting the applied value of the second locality into the currency value of the first locality by the conversion rate at a predetermined time point (e.g., the predetermined time point before the user operation), and of putting the converted currency value to use in the settlement amount in the electronic-commerce.

As described in step S304 in FIG. 6, and step S613 in the purchase confirm information receiving process in FIG. 8, etc., the predetermined time may be the time point at which the payment procedure screen (e.g., FIG. 5) is provided.

Accordingly, since the value of the owned points and the points to be applied which are grasped by the user through the payment procedure screen are directly applied for the settlement, there is no divergence between the state grasped through the payment procedure screen and the actual applied points. Accordingly, the purchase service for the product can be provided without losing the user's credence.

As described with reference to FIG. 5 and FIG. 10, etc., the information transmitting unit 1c of the information processing system may transmit information in such a way that information based on a currency value of the first locality is presented on the payment procedure screen, the currency value of the first locality being a currency value into which a value of locality (e.g., America) other than the first locality (e.g., Japan), which is applicable for the user, is converted by the conversion rate at the predetermined time point.

That is, since the value when the US point is converted into Japanese YEN (or the value when converted into the JP point) is displayed on the payment procedure screen, when or in a case in which the number of points applied for the purchase is decided, how much price to be paid is cleared can be easily grasped. That is, the user friendliness can be enhanced.

As described with reference to FIG. 10, the information transmitting unit 1c of the information processing system may transmit information in such a way that a currency value of the first locality is presented on the payment procedure screen, the currency value of the first locality being a currency value into which a value of a locality (e.g., America) other than the first locality (e.g., Japan), which is applicable for the user, is converted by the conversion rate at the predetermined time point.

That is, since the value when the US point is converted into Japanese YEN is displayed on the payment procedure screen, when or in a case in which the number of points applied for the purchase is decided, how much price to be paid is cleared can be easily grasped. In particular, since the value when converted into Japanese YEN is displayed, an easy-to-view display is presented when it is decided how many points are applied to the purchase price, and thus the user friendliness is remarkably enhanced.

As described with reference to FIG. 10, the information transmitting unit 1c of the information processing system transmits information in such a way that a currency value obtained by adding a currency value of the first locality to the value of the first locality is presented on the payment procedure screen, the currency value of the first locality being a currency value into which a value of a locality (e.g., America) other than the first locality (e.g., Japan), which is applicable for the user, is converted by the conversion rate at the predetermined time point.

That is, how much value of Japanese YEN the multiple kinds of points owned by the user have are totaled and displayed.

Hence, even if owning multiple kinds of points, the user can easily confirm how many points are applicable, and thus the user friendliness is enhanced.

As described with reference to FIG. 5 and FIG. 11, the information transmitting unit 1c of the information processing system may select a value of an applicable locality (e.g., America) among the values of localities (e.g., America and Russia) other than the first locality (e.g., Japan), which are applicable for the user, and may transmit information in such a way that the information based on a currency value of the first locality is presented on the payment procedure screen, the currency value of the first locality being a currency value into which the value of the applicable locality is converted by the conversion rate at the predetermined time point.

Accordingly, as illustrated in FIG. 5, by not displaying the value of the non-applicable locality, the information at the minimum requisite can be presented to the user, and the payment procedure screen with an excellent visibility for the user can be provided.

Moreover, as illustrated in FIG. 11, by a different display of the value of the non-applicable locality, all the number of points owned by the user can be presented, and the value of the applicable locality can be easily understood. Accordingly, a large quantity of information can be provided to the user without deteriorating the easy-to-view appearance of the payment procedure screen.

As described in the second modified example of the owned-point-information display field, selection of the value of the applicable locality may be executed in accordance with the service kind of the electronic-commerce that provides the payment procedure screen.

Accordingly, since the user can visually confirm the information on the value of the applicable locality without paying attention to the difference in the services provided by the electronic-commerce server 4, the user friendliness is enhanced.

As described with reference to the third example of the owned-point-information display field and FIG. 12, the information transmitting unit 1c of the information processing system may transmit information in such a way that, in the payment procedure screen, information on the conversion rate adopted for the value of the locality (e.g., America) other than the first locality (e.g., Japan) is presented.

Accordingly, the clarity for the point conversion is visually clarified, and thus the service in which the value (i.e., the points as the benefit) of the locality other than the first locality is applicable can be provided without causing the user to have worry.

As described with reference to the fourth modified example of the owned-point-information display field and FIG. 13, the information transmitting unit 1c of the information processing system may transmit information in such a way that, in the payment procedure screen, information regarding a change in the conversion rate adopted for the value of the locality (e.g., America) other than the first locality (e.g., Japan) is presented.

Since an indicator to decide the points to be applied is presented to the user and a factor like a game can be added to a purchase activity, and thus the user's purchase intent is motivated.

As described with reference to the first modified example, etc., of the applied-point-information display field, in the payment procedure screen displayed on the user terminal 3 by the webpage information transmitted from the information processing system, selection of application or non-application and designation of the applied amount in a case of the application may be enabled for the value of each locality individually.

This facilitates a selection of the value of the applied locality, thereby enhancing the user friendliness and improving the user operability.

Note that in each example, although the JP point (1 pt = 1 YEN), the US point (10 pt = 1 U.S. dollar), the EU point (100 pt = 1 euro), and the RU point (1 pt = 1 ruble) have been described as examples, other currencies than those may be applied. When, for example, the platform terminal 1 is a terminal of a company that goes international, the points of each country (each economic block) handled by the platform terminal 1 may be a TW point (1 pt = 1 Taiwanese dollar) convertible into Taiwan dollar, an AU point (100 pt = 1 Australian dollar), a TH point (1 pt = 1 baht), or an IN point (1 pt = 1 rupee), etc. In this case, the platform terminal 1 may be enabled to execute a converting process between respective currencies like a process of converting the TW point so as to be applicable in a purchase that utilizes rupee which is the unit of currency in India.

### <9. Program and Storage Medium>

As described above, although the platform terminal 1 has been described as an embodiment of the information processing device according to the present disclosure, a program according to an embodiment causes the arithmetic processing unit of the platform terminal 1 to execute a process of obtaining, from the value managing device, the information on the value. The information is associated with the identification information of the user who uses the terminal device. The value for each locality corresponds to the currency value for each locality.

Moreover, the program causes the arithmetic processing unit of the platform terminal 1 to execute a process of obtaining the information on the currency exchange rate consecutively, and of setting the conversion rate of values between the localities.

Furthermore, the program causes the arithmetic processing unit of the platform terminal 1 to execute a process of transmitting the information on the value applicable for the user based on the value for each locality obtained by the information obtaining unit as information necessary for the terminal device to present the payment procedure screen for the electronic-commerce by the currency of a first locality between the terminal device and the service server.

Still further, the program causes the arithmetic processing unit of the platform terminal 1 to execute, in response to a request for applying a value of a second locality upon a user operation through the payment procedure screen, a process of converting the applied value of the second locality into the currency value of the first locality by the conversion rate at a predetermined time point (e.g., the time point before the user operation), and of putting the converted currency value to use in the settlement amount in the electronic-commerce. The second locality is a locality other than the first locality

That is, this program is a program that causes the information processing device (the platform terminal 1) to execute the respective processes from step S301 to step S303 illustrated in FIG. 4 (or FIG. 9), the respective processes in steps S304 and S305 illustrated in FIG. 6, and the respective processes illustrated in FIG. 7, and FIG. 8.

Such a program enables an achievement of one or a plurality of the information processing devices as the above-described platform terminal 1.

Moreover, such a program may be stored in advance in an HDD that is a storage medium built in an apparatus like a computer apparatus, a ROM in a microcomputer that has a CPU, or the like. Alternatively, the program may be temporarily or permanently recorded (stored) in a removable storage medium, such as a semiconductor memory, a memory card, an optical disk, a magneto-optical disc, or a magnetic disk. Furthermore, such a removable storage medium can be provided as a so-called software package.

Still further, such a program may be installed in a personal computer, etc., from the removable storage medium, and also downloadable via a network, such as a LAN or the Internet, from a download site.

### REFERENCE SIGNS LIST

- 1: Platform terminal
- 1a: Information obtaining unit
- 1b: Rate setting unit
- 1c: Information transmitting unit
- 1d: Value processing unit
- 3: User terminal
- 4: Electronic-commerce server
- 6: Benefit issuing terminal
- 51: Benefit DB

## Claims

1. An information processing device comprising:
an information obtaining unit that obtains, from a value managing device, information on a value for each locality, the information being associated with identification information of a user who uses a terminal device, the value for each locality corresponding to a currency value for each locality;
a rate setting unit which obtains information on a currency exchange rate consecutively, and which sets a conversion rate for the values between the localities;
an information transmitting unit that transmits information on a value applicable for the user based on the value for each locality obtained by the information obtaining unit, the information on the value applicable for the user being information necessary for causing the terminal device to present a payment procedure screen for electronic-commerce by a currency of a first locality between the terminal device and a service server; and
a value processing unit that executes, in response to a request for applying a value of a second locality upon a user operation through the payment procedure screen, a process of converting the applied value of the second locality into a currency value of the first locality by the conversion rate at a predetermined time point, and of putting the converted currency value to use in a settlement amount in the electronic-commerce, the second locality being a locality other than the first locality.

2. The information processing device according to claim 1, wherein
the predetermined time point is a time point at which the payment procedure screen is provided.

3. An information processing system comprising:
an information obtaining unit that obtains, from a value managing device, information on a value for each locality, the information being associated with identification information of a user who uses a terminal device, the value for each locality corresponding to a currency value for each locality;
a rate setting unit which obtains information on a currency exchange rate consecutively, and which sets a conversion rate for the values between the localities;
an information transmitting unit that transmits to the terminal device, webpage information to display a payment procedure screen for electronic-commerce by a currency of a first locality, together with information on a value applicable for the user based on the value for each locality obtained by the information obtaining unit; and
a value processing unit that executes, in response to a request for applying a value of a second locality upon a user operation through the payment procedure screen, a process of converting the applied value of the second locality into a currency value of the first locality by the conversion rate at a predetermined time point, and of putting the converted currency value to use in a settlement amount in the electronic-commerce, the second locality being a locality other than the first locality.

4. The information processing system according to claim 3, wherein
the predetermined time point is a time point at which the payment procedure screen is provided.

5. The information processing system according to claim 3 or 4, wherein
the information transmitting unit transmits information in such a way that information based on a currency value of the first locality is presented on the payment procedure screen, the currency value of the first locality being a currency value into which a value of a locality other than the first locality, which is applicable for the user, is converted by the conversion rate at the predetermined time point.

6. The information processing system according to any one of claims 3 to 5, wherein
the information transmitting unit transmits information in such a way that a currency value of the first locality is presented on the payment procedure screen, the currency value of the first locality being a currency value into which a value of a locality other than the first locality, which is applicable for the user, is converted by the conversion rate at the predetermined time point.

7. The information processing system according to any one of claims 3 to 5, wherein
the information transmitting unit transmits information in such a way that a currency value obtained by adding a currency value of the first locality to the value of the first locality is presented on the payment procedure screen, the currency value of the first locality being a currency value into which a value of a locality other than the first locality, which is applicable for the user, is converted by the conversion rate at the predetermined time point.

8. The information processing system according to claims 3 or 4, wherein
the information transmitting unit selects a value of an applicable locality among the values of localities other than the first locality, which are applicable for the user, and transmits information in such a way that information based on a currency value of the first locality is presented on the payment procedure screen, the currency value of the first locality being a currency value into which the value of the applicable locality is converted by the conversion rate at the predetermined time point.

9. The information processing system according to claim 8, wherein
selection of the value of the applicable locality is executed in accordance with a service kind of the electronic-commerce that provides the payment procedure screen.

10. The information processing system according to any one of claims 3 to 9, wherein
the information transmitting unit transmits information in such a way that, in the payment procedure screen, information on the conversion rate adopted for the value of the locality other than the first locality is presented.

11. The information processing system according to any one of claims 3 to 10, wherein
the information transmitting unit transmits information in such a way that, in the payment procedure screen, information regarding a change in the conversion rate adopted for the value of the locality other than the first locality is presented.

12. The information processing system according to any one of claims 3 to 10, wherein
in the payment procedure screen, selection of application or non-application and designation of the applied amount in a case of the application are enabled for the value of each locality individually.

13. An information processing method executed by an information processing device, the method comprising:
an information obtaining step of obtaining, from a value managing device, information on a value for each locality, the information being associated with identification information of a user who uses a terminal device, the value for each locality corresponding to a currency value for each locality;
a rate setting step of obtaining information on a currency exchange rate consecutively, and of setting a conversion rate for the values between the localities;
an information transmitting step of transmitting information on a value applicable for the user based on the value for each locality obtained in the information obtaining step, the information on the value applicable for the user being information necessary for causing the terminal device to present a payment procedure screen for electronic-commerce by a currency of a first locality between the terminal device and a service server; and
a value processing step of executing, in response to a request for applying a value of a second locality upon a user operation through the payment procedure screen, a process of converting the applied value of the second locality into a currency value of the first locality by the conversion rate at a predetermined time point, and of putting the converted currency value to use in a settlement amount in the electronic-commerce, the second locality being a locality other than the first locality.
